# EUROPEAN PATENT SPECIFICATION

(11) **EP 1 155 072 B1**
(45) Date of publication and mention of the grant of the patent: **17.08.2005**
(21) Application number: 99901286.7
(22) Date of filing: 05.01.1999
(51) Int. Cl.: C08K 5/00, C08L 77/00, C08L 67/00, C08L 59/00

(54) **BLOW MOLDING COMPOSITION**
FORMBLASZUSAMMENSETZUNG
COMPOSITION POUR MOULAGE PAR SOUFFLAGE

(43) Date of publication of application: 21.11.2001
(73) Proprietor: E.I. DUPONT DE NEMOURS AND COMPANY, Wilmington, DE 19808 (US)
(72) Inventor: STERN, Alfred, 1203 Geneve (CH)
(74) Representative: Freiherr von Wittgenstein, Arved, Dr.
(86) International application number: PCT/US1999/000068
(87) International publication number: WO 2000/040649

(56) References cited:
- EP-A- 0 410 907
- US-A- 5 408 000
- PATENT ABSTRACTS OF JAPAN vol. 008, no. 232 (C-248), 25 October 1984 (1984-10-25) & JP 59 113027 A (TEIJIN KK), 29 June 1984 (1984-06-29) -& DATABASE WPI Section Ch, Week 8432 Derwent Publications Ltd., London, GB; Class A23, AN 84-198161 XP002115782
- PATENT ABSTRACTS OF JAPAN vol. 095, no. 008, 29 September 1995 (1995-09-29) & JP 07 138477 A (MITSUBISHI CHEM CORP), 30 May 1995 (1995-05-30) -& JP 07 138477 A (MITSUBISHI)
- PATENT ABSTRACTS OF JAPAN vol. 007, no. 277 (C-199), 9 December 1983 (1983-12-09) & JP 58 157852 A (TEIJIN KK), 20 September 1983 (1983-09-20)
- PATENT ABSTRACTS OF JAPAN vol. 017, no. 176 (C-1045), 6 April 1993 (1993-04-06) & JP 04 332735 A (TORAY IND INC), 19 November 1992 (1992-11-19)

## Description

### BACKGROUND

### 1. Field of the Invention

This invention relates to the field of blow moldable thermoplastic compositions.

### 2. Description of the Related Art

Synthetic resins, including polyesters and aliphatic polyamides, such as nylon-6,6 and nylon-6, and copolymers thereof, are often used for blow molded articles. For example, blow moldable thermoplastic polyamide compositions are disclosed in US 5,408,000.

The blow molding process begins with producing a polymer melt in a horizontal extruder. In extrusion blow molding this high viscosity melt is extruded vertically through die tooling, forming a tube of molten resin called a "parison". This parison tube is captured by a mold, pinching the top and bottom, inflated, and cooled while subjected to internal air pressure. The mold is then opened, yielding a rigid, hollow part.

Extrusion blow molding is done on equipment with a parison forming continuously or intermittently. The continuous blow molding method, generally limited to small and medium-sized parts, continuously forms a parison from one or more die heads, or alternates flow to multiple die heads. Molds can be fixed in position and dedicated to one die head or can shuttle on a swing arm or rotating wheel away from the head to complete the blowing and cooling steps.

Extrusion blow molding uses a pinch-off technique to close the parison for inflation. The mold closes, pinching the ends of the parison and forming a seal. The pinch-off size and location will vary with the part design and processing equipment used. The most common methods locate pinch-offs at either end of the parison or along the entire part perimeter.

The pinch-off can produce a weak area at the weld. As the mold closes, the resin composition has had some time to cool and undergo a variety of other changes after extrusion from the die head and does not weld as completely as fully molten resin. The amount of property loss varies with the resin composition, processing parameters, and mold design.

In general, strength is reduced across the weld line. This results in a weak section along the length of the parison.

Furthermore, a problem with this pinch welding process arises when the notch formed between the two sides of the molded article is too deep relative to the thickness of its bottom wall. In such a case, the notch creates a weakness in the bottom of the article. The amount of strength loss depends upon processing conditions, equipment and resin composition.

### SUMMARY OF THE INVENTION

A blow moldable thermoplastic composition as defined in claim 1.

### DETAILED DESCRIPTION

The composition described herein is a blow molding resin composition that has good welding behavior and has good physical properties. The composition has three components (1) a thermoplastic resin; (2) a viscosity modifier; and (3) a weld improvement additive.

The first component is a thermoplastic resin which is present in an amount of about 52 to about 98.8 weight percent of the composition. As used herein, the term "thermoplastic resin" includes synthetic polyamides, polyesters, polyacetals, or a block polyester ether copolymer, as well as mixtures or blends thereof.

"Synthetic polyamide", as used herein, includes a polymer which is made by man, and does not include natural fibers such as wools or silks. By an "aliphatic polyamide" is meant a polymer which has repeat units which include amide groups in the main chain, and in which at least some, preferably at least 50 mole percent, of these amide groups (through the nitrogen atoms and/or carbonyl carbon atoms of the amide groups) are connected to aliphatic carbon atoms. Preferred polyamides include nylon-6,6, nylon-6, nylon 6,12, and copolymers of nylon-6,6 and nylon 6.

"Polyester" as used herein includes polymers having an inherent viscosity of 0.3 or greater and which are, in general, linear saturated condensation products of glycols and dicarboxylic acids, or reactive derivatives thereof. Preferably, they will comprise condensation products of aromatic dicarboxylic acids having 8 to 14 carbon atoms and at least one glycol selected from the group consisting of neopentyl glycol, cyclohexane dimethanol and aliphatic glycols of the formula HO(CH₂)nOH where n is an integer of 2 to 10. Up to 50 mole percent of the aromatic dicarboxylic acids may be replaced by at least one different aromatic dicarboxylic acid having from 8 to 14 carbon atoms, and/or up to 20 mole percent may be replaced by an aliphatic dicarboxylic acid having from 2 to 12 carbon atoms.

The most common polyester compositions are based on polyethylene terephthalate homopolymers, polybutylene terephthalate homopolymers, polyethylene terephthalate /polybutylene terephthalate copolymers, polyethylene terephthalate/polybutylene terephthalate mixtures and mixtures thereof, although other polyester may be used as well, alone, in combination with each other, or in combination with those polyesters listed above.

The second component in the invention is 1-45 weight percent of a viscosity modifier which results in the composition having a melt flow rate value of from 1 to 50 grams per 10 minutes. Examples of viscosity modifiers include a maleic anhydride modified polymer such as a rubber, ethylene propylene diene elastomer (EPDM), olefins; an ionomer; styrene maleic anhydride copolymers; or maleic anhydride modified styrene ethylene butyl styrene copolymers (SEBS).

The third component of the invention is about 0.2 to about 3 weight percent of a weld improvement additive that is a mixture of at least two components: (1) a high molecular weight multifunctional nitrogen containing hindered phenolic antioxidant and (2) high molecular weight multifunctional ester group-containing hindered phenolic antioxidant. The high molecular weight multifunctional ester group-containing hindered phenolic antioxidant should be present in an amount of at least 0.1 weight percent. Each of these weld improvement additives is know individually to be useful as an antioxidant, but it has been unexpectedly discovered that the combination of these additives improves the welding behavior of a blow moldable thermoplastic composition, and results in a blow molded composition that has good physical properties

Optionally, the weld improvement additive may also include a mixture of a copper salt and a potassium halide.

The first element of the weld improvement additive is an alkylhydroxyphenyl polyamide, containing at least two amide groups separated from another by at least one polyvalent hydrocarbon chain of at least 2 carbon atoms. One of the free nitrogen atom valences of each of these amide units will bear a hydrogen atom while the second valence of each of these amide units will be satisfied by one of the carbon atom valences of the hydrocarbon chain. The hydrocarbon chain may have a straight or branched chain and be aliphatic or alicyclic. Representative of these amides are those derived from the alkylhydroxyphenylalkanoic acids and polyamines such as ethylenediamine, 1,3-diaminopropane, 1,6-diaminohexane, 1,10-diaminodecane, 1,1-di(aminomethyl)-ethylamine, tetra(aminomethyl)methane, 1,4-diaminomethyl-cyclohexane, 1,4-diaminocyclohexane, 1,2-diaminocyclohexane, and the like. This type of hindered phenolic antioxidant may thus be represented by the following formula: 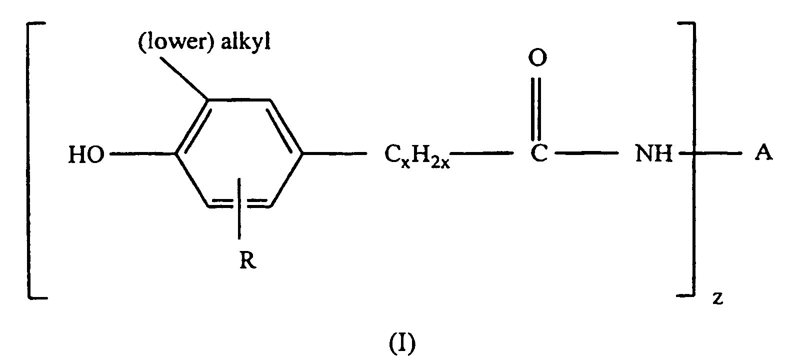 wherein R is hydrogen or a (lower) alkyl, x has a value from 0 to 6, z has a value from 2 to 4 and A is a polyvalent hydrocarbon chain having a valence equal to z. By the term alkyl is intended a group-containing a branched or straight chain hydrocarbon chain of from 1 to 30 carbon atoms inclusively. Representative of these groups may thus be methyl, ethyl, propyl, butyl, t-butyl, octyl, decyl, dodecyl, tetradecyl, octadecyl, eicosyl, and the like. The term "(lower)" alkyl group, on the other hand, describes a branched or straight chain hydrocarbon group of from 1 to about 6 carbon atoms.

The phenolic group of compound (I) thus exhibits at least one (lower) alkyl group in a position ortho to the hydroxy group. The second substituent R may also be a (lower alkyl) group in the other position ortho to the hydroxy group or meta to the hydroxy group and para to the first (lower) alkyl group. Preferred are the di-(lower)alkyl-phenolic groups and although not so limited, the (lower) alkyl groups are preferably branched groups such as t-butyl (e.g. 3,5-di-tert-butyl-4-hydroxyphenyl).

An example of the hindered phenolic antioxidant is N,N'-hexamethylene bis (3,5-di-tert-butyl-4-hydroxy-hydrocinnamamide) sold by Ciba-Geigy under the trademark Irganonox ®1098. Irganox®1098 used in the formulation described in the following example of a blow moldable nylon 6 composition is represented by the formula given in Fig. I when "R" is a t-butyl group in the ortho position, "(lower) alkyl" also a t-butyl group, and x is 2, z is 2 and A is C₆H₁₂.

The second component of the weld improvement additive is a high molecular weight multifunctional ester group-containing hindered phenolic antioxidant. An example of such an additive is pentaerythrityl-tetrakis [3-(3,5-di-tert.butyl-4-hydroxyphenyl)-propionate, sold by Ciba-Geigy under the trademark Irganox® 1010.

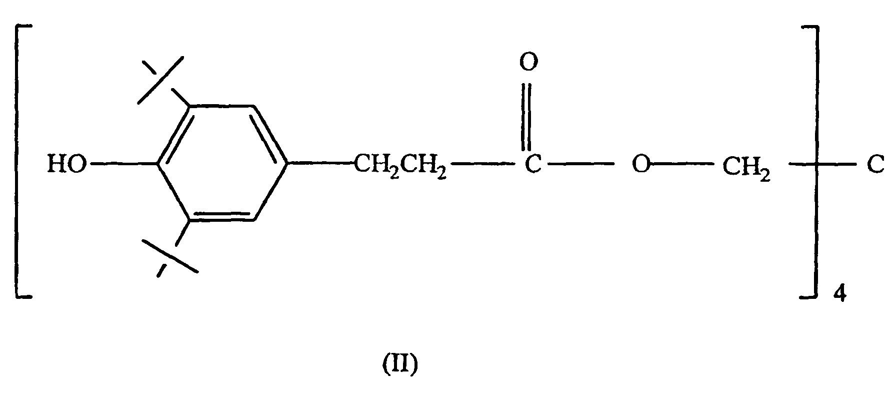

### EXAMPLES

In the following examples, the blow moldable thermoplastic composition included a nylon 6 as the thermoplastic resin, and the nylon 6 was modified with maleic anhydride grafted ethylene-propylene-diene-rubber, EPDM-g-MA, which served as the viscosity modifier. The blow moldable composition was prepared by providing a nylon 6 with a relative viscosity of 95 cm3/g, adding 17.5 %, based on the total weight of the blow moldable composition, of a maleic anhydride grafted EPDM rubber, and then tumbling these components together to blend them. Weld improvement additives of the present invention were added to the composition in varying amounts and the composition was further blended to obtain a homogenous composition. All amounts are given in parts by weight and refer to the total composition of resin, viscosity modifier and weld improvement additives only.

The blow moldable thermoplastic composition was prepared as follows. The resultant dry blend of the resin, viscosity modifier, and weld improvement additive was melt blended in a 30 mm Werner & Pfleiderer twin screw extruder. The screw used was a general purpose screw with vacuum capability which included elements to convey the feed material from the feed zone to a melting zone in which the material was compressed and melting commenced. The melt was decompressed in the vacuum zone and then compressed again and further mixed as the melt passed through the extruder and out the die. The extruder barrel and the die were set to 300C. The melt strand exiting the extruder was quenched in water and cut into pellets.

The blow moldable thermoplastic composition was blow molded as follows. The pelletized composition was dried in a vacuum oven for at least 8 hours at 90C and the dried composition was blow molded into 1 liter bottles on a Battenfeld Fischer VK104 blow molding machine. The temperature setting on the blow molding machine was between 230 and 240C. To obtain the 1 liter bottles a parison of approximately 300 mm length was extruded. When the required parison length was reached the mold closed, forming a weld line at the bottom of the bottles and pinching off the excess length of the parison.

In order to assess the quality of the pinch weld line the bottom of the bottles were cut off and the weld lines were examined. To quantify the quality of the pinch weld the thickness of the notch at the weld line, n and the average bottle wall thickness next to the pinch weld d were measured. The value of n was divided by d and denominated 'relative weldline depth'. This value was used to determine the quality of the pinch weld for the various compositions tested. The closer the relative weldline depth is to 1, the better the quality and appearance of the pinch weld.

Furthermore, a punching machine was used to cut small specimens according to DIN53504, shape S2 from the bottom of the bottles. The dumbbell specimens were punched from the bottle bottoms in such a way that the pinch weld line was running through the middle of the specimens in a perpendicular direction. The specimens were dried in a vacuum oven under nitrogen at 80C for 12 hours. The dry specimens were tested in a tensile testing machine at a testing speed of 50 mm/min. All specimens were tested until breakage occurred and the maximum force and elongation at break were recorded. The stress at break was calculated by dividing the maximum force during the tensile test by the area of the thinnest cross section in the pinch weld line area.

The melt flow rate was measured at 275C with a weight of 21.6 kilograms on dried specimens on a Zwick melt indexer according to DIN 53735.

In the following examples, the components evaluated as weld improvement additives were as follows:
Weld improvement additive A was a triblend of potassium iodide, copper iodide and aluminium distearate;
Weld improvement additive B was N,N'-hexan-1,6-diylbis [3-(3,5-di-tert-butyl-4-hydroxy- phenylpropionamide)], sold under the trademark Irganox®1098; and
Weld improvement additive C was tetrakis[methylene(3,5-di-tert-butyl-4 hydroxyhydrocinnamate)]-methane, sold under the trademark Irganox®1010.

A total of 9 blow moldable thermoplastic composition were made and evaluated, and the results of those evaluations are summarized in Table 1.

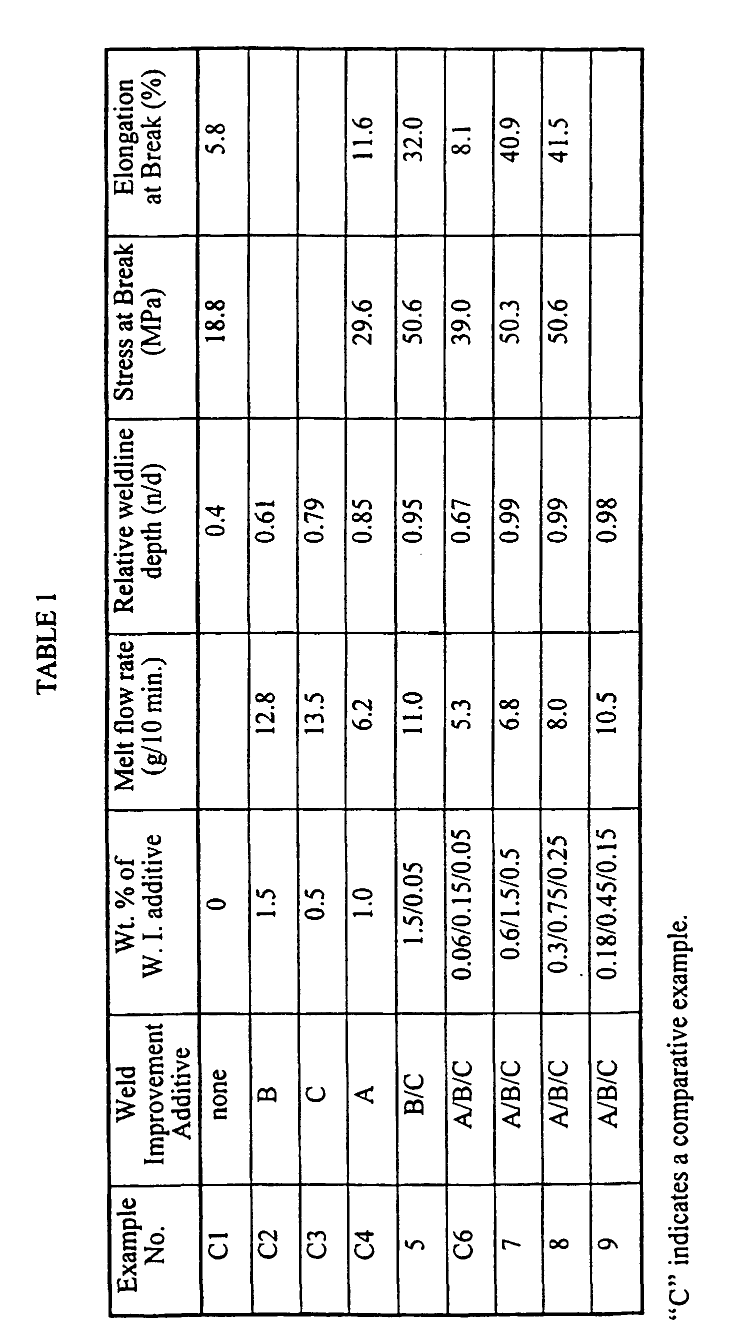

Example 1 a comparative example in which no heat stabilizer was added to the resin and the viscosity modifier. The weldline depth had an unsatisfactory value of 0.4.

Examples 2-4 were comparative Examples which showed that Weld improvement additives A, B and C, when used alone, produced unacceptable results of weldline depth and, in the case of Example 4, unacceptable physical properties.

The relative weldline depths for the investigated compositions in Table I clearly show that the most significant improvement compared to the comparative Examples was obtained by using the inventive combination of weld improvement additives B and C, as shown in Example 5. Furthermore, Examples 5, 7 and 8 exhibit significantly improved stress and strain at break values as compared to Examples 1 and 4.

Example 6 included weld improvement additives A, B and C, but the relative amount of additive C was too low to achieve the desired acceptable results.

Examples 5 and 7-9 show that the inventive combination of the two hindered phenolic antioxidants significantly improved the pinch weld appearance and the stress and elongation at break of the pinch weld compared to the comparative Examples. Moreover, while Comparative Examples 2 - 4 show that adding a single antioxidant to the composition improves the pinch weld properties to some degree, only a combination of both hindered phenolic antioxidants gives an acceptable combination of improved pinch weld appearance and strength. Furthermore, Examples 5, 7 - 9 show that an additional component of a copper halide further improves the pinch weld properties.

In addition to the components discussed above, the compositions of this invention may contain additives commonly employed with synthetic resins, such as colorants, mold release agents, antioxidants, tougheners, nucleating agents, a glass or mineral reinforcing agent such as glass, carbon, mica and/or aramid fibers, ultraviolet light stabilizers, flame retardants and the like. An example of a common filler is magnesium hydroxide.

## Claims

1. A blow moldable thermoplastic composition which comprises a blend of
a. 52-98.8 weight percent of a thermoplastic resin;
b. 1-45 weight percent of a viscosity modifier which results in the composition having a melt flow rate value of from 1 to 50 grams per 10 minutes; and
c. 0.2-3 weight percent of a weld improvement additive comprising a mixture of:
(I) a high molecular weight multifunctional nitrogen containing hindered phenolic antioxidant represented by the following formula: 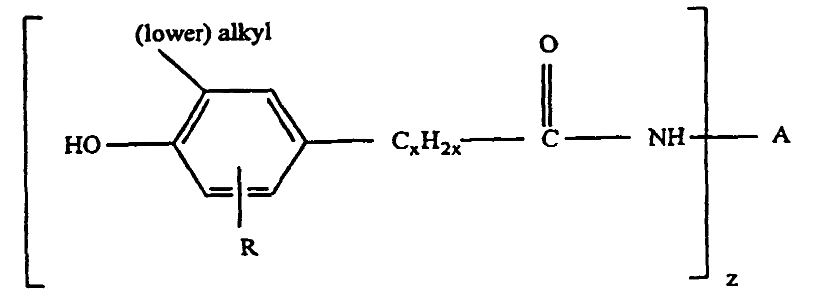 wherein R is hydrogen or a C₁-C₃₀ alkyl, x has a value from 0 to 6, z has a value from 2 to 4 and A is a polyvalent hydrocarbon chain having a valence equal to z; and
(II) at least 0.1 weight percent of a high molecular weight multifunctional ester group-containing hindered phenolic antioxidant;
said weight percents based on the relative amounts of components a., b. and c. only.

2. The composition of claim 1, wherein the thermoplastic resin is a synthetic polyamide, polyester, polyacetal, or a block polyester ether copolymer, or mixtures thereof.

3. The composition of claim 1, wherein the viscosity modifier is a maleic anhydride modified polymer, an ionomer or a maleic anhydride copolymer.

4. The composition of claim 3, wherein the maleic anhydride modified polymer is a modified rubber, an ethylene propylene diene elastomer, a polyolefin, or an ethylene butyl styrene copolymer.

5. The composition of claim 1, wherein the high molecular weight multifunctional nitrogen containing hindered phenolic antioxidant is N,N'-hexan-1,6-diylbis [3-(3,5-di-tert-butyl-4-hydroxy- phenylpropionamide)].

6. The composition of claim 1, wherein the high molecular weight multifunctional ester group-containing hindered phenolic antioxidant is tetrakis[methylene(3,5-di-tert-butyl-4 hydroxyhydrocinnamate)]-methane.

7. The composition of claim 1, wherein the weld improvement additive further comprises a mixture of copper salt and potassium halide.

8. An article blow molded from a composition of any of claims 1 to 7.

9. Use of a weld improvement additive comprising a mixture of:
(I) a high molecular weight multifunctional nitrogen containing hindered phenolic antioxidant represented by the following formula: 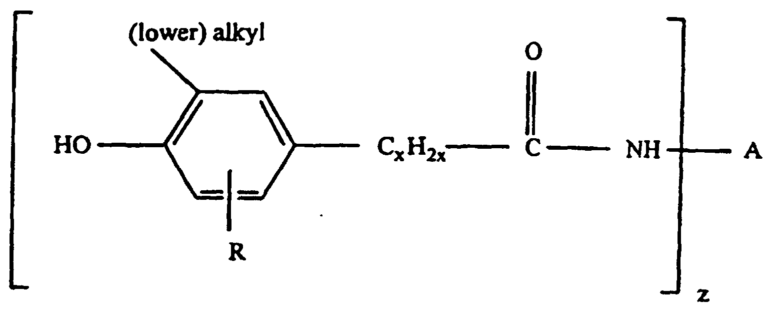 wherein R is hydrogen or a C₁-C₃₀ alkyl, x has a value from 0 to 6, z has a value from 2 to 4 and A is a polyvalent hydrocarbon chain having a valence equal to z; and
(II) a high molecular weight multifunctional ester group-containing hindered phenolic antioxidant a hindered phenolic antioxidant,
to improve the welding characteristics of a blow moldable thermoplastic composition.

## Patentansprüche

1. Blasformbare thermoplastische Zusammensetzung, aufweisend ein Blend aus:
a. 52% bis 98,8 Gewichtsprozent eines thermoplastischen Harzes;
b. 1% bis 45 Gewichtsprozent eines Viskositätsverbesserers, der zu einer Zusammensetzung führt, die einen Schmelzindex von 1 bis 50 Gramm pro 10 Minuten hat; und
c. 0,2% bis 3 Gewichtsprozent eines Additivs zur Verbesserung der Schweißbarkeit, aus einer Mischung, aufweisend:
(I) ein multifunktionelles, Stickstoff enthaltendes und gehindertes, phenolisches Antioxidans mit hohem Molekulargewicht, das dargestellt wird durch die folgende Formel: 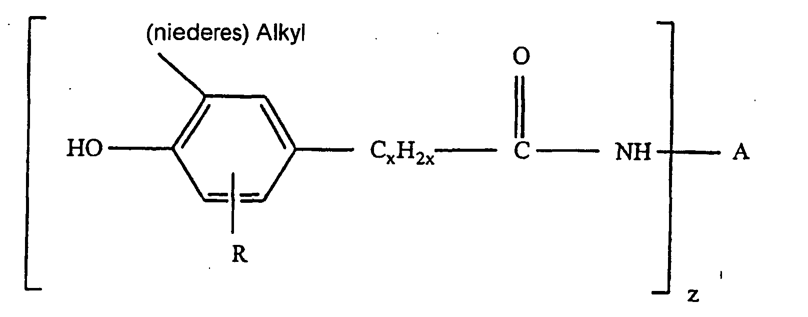 worin R Wasserstoff ist oder ein C₁- bis C₃₀-Alkyl, x hat einen Wert von Null bis 6, z hat einen Wert von 2 bis 4 und A ist eine mehrwertige Kohlenwasserstoff-Kette mit einer Valenzzahl von Null bis z; sowie
(II) mindestens 0,1 Gewichtsprozent eines multifunktionellen, Estergruppe enthaltenden und gehinderten, phenolischen Antioxidans mit hohem Molekulargewicht;
wobei diese Molekulargewichte lediglich auf die relativen Mengen der Komponenten a, b und c beruhen.

2. Zusammensetzung nach Anspruch 1, worin das thermoplastische Harz ein synthetisches Polyamid, Polyester, Polyacetal oder ein Polyesterether-Blockcopolymer ist oder Mischungen davon.

3. Zusammensetzung nach Anspruch 1, worin der Viskositätsverbesserer ein mit Maleinsäureanhydrid modifiziertes Polymer ist, ein Ionomer oder ein Maleinsäureanhydrid-Copolymer.

4. Zusammensetzung nach Anspruch 3, worin das mit Maleinsäureanhydrid modifizierte Polymer ein modifizierter Kautschuk ist, ein Ethylen-Propylen-Dien-Elastomer, ein Polyolefin oder ein Ethylen/Butylstyrol-Copolymer.

5. Zusammensetzung nach Anspruch 1, worin das multifunktionelle, Stickstoff enthaltende und gehinderte, phenolische Antioxidans mit hohem Molekulargewicht N,N'-Hexan-1,6-diylbis[3-(3,5-di-*tert*-butyl-4-hydroxy-phenylpropionamid)] ist.

6. Zusammensetzung nach Anspruch 1, worin das multifunktionelle, Stickstoff enthaltende und gehinderte, phenolische Antioxidans mit hohem Molekulargewicht Tetrakis[methylen(3,5-di-*tert*-butyl-4-hydroxy-hydrocinnamat)]methan ist.

7. Zusammensetzung nach Anspruch 1, worin das Additiv zur Verbesserung der Schweißbarkeit ferner eine Mischung von Kupfersalz und Kaliumhalogenid aufweist.

8. Artikel, blasgeformt aus einer Zusammensetzung nach einem der Ansprüche 1 bis 7.

9. Verwendung eines Additivs zur Verbesserung der Schweißbarkeit, aufweisend eine Mischung aus:
(I) einem multifunktionellen, Stickstoff enthaltenden und gehinderten, phenolischen Antioxidans mit hohem Molekulargewicht, das dargestellt wird durch die folgende Formel: 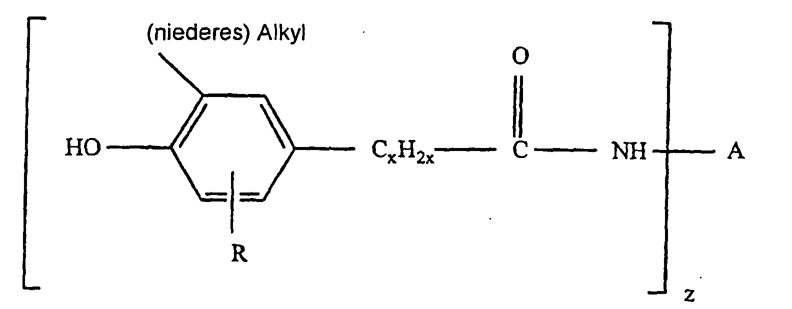 worin R Wasserstoff ist oder ein C₁- bis C₃₀-Alkyl, x hat einen Wert von Null bis 6, z hat einen Wert von 2 bis 4 und A ist eine mehrwertige Kohlenwasserstoff-Kette mit einer Valenzzahl von Null bis z; sowie
(II) einem multifunktionellen, Estergruppe enthaltenden und gehinderten, phenolischen Antioxidans mit hohem Molekulargewicht,
um die Schweißeigenschaften der blasformbaren thermoplastischen Zusammensetzung zu verbessern.

## Revendications

1. Composition thermoplastique moulable par soufflage qui comprend un mélange de
a. 52 à 98,8 pour cent de poids d'une résine thermoplastique;
b. 1 à 45 pour cent de poids d'un modificateur de viscosité donnant une composition ayant une valeur d'indice de fusion variant de 1 à 50 grammes en 10 minutes; et
c. 0,2 à 3 pour cent de poids d'un additif d'amélioration de soudure comprenant un mélange de:
(I) un antioxydant phénolique stériquement encombré, contenant de l'azote, multifonctionnel et de haut poids moléculaire représenté par la formule suivante: 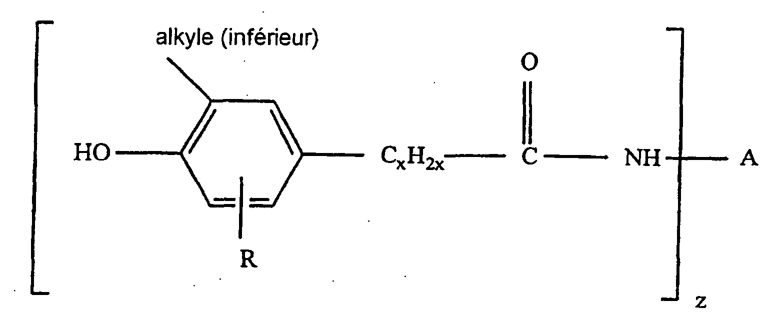 dans laquelle R est un hydrogène ou un alkyle en C₁ - C₃₀, la valeur de x varie de 0 à 6, la valeur de z varie de 2 à 4 et A est une chaîne d'hydrocarbure polyvalente ayant une valence égale à z; et
(II) au moins 0,1 pour cent de poids d'un antioxydant phénolique stériquement encombré, contenant un groupe ester, multifonctionnel et de haut poids moléculaire;
lesdits pourcentages de poids étant basés uniquement sur les quantités relatives des composants a, b et c.

2. Composition de la revendication 1, dans laquelle la résine thermoplastique est un polyamide, un polyester ou un polyacétal synthétique, ou un copolymère séquencé d'éther et de polyester, ou des mélanges de ces derniers.

3. Composition de la revendication 1, dans laquelle le modificateur de viscosité est un polymère modifié par de l'anhydride maléique, un ionomère ou un copolymère d'anhydride maléique.

4. Composition de la revendication 3, dans laquelle le polymère modifié par de l'anhydride maléique est un caoutchouc modifié, un élastomère diénique d'éthylène et de propylène, une polyoléfine, ou un copolymère d'éthylène butyle styrène.

5. Composition de la revendication 1, dans laquelle l'antioxydant phénolique stériquement encombré, contenant de l'azote, multifonctionnel et de haut poids moléculaire est le N,N'-hexane-1,6-diylbis[3-(3,5-di-tert-butyl-4-hydroxyphénylpropionamide)].

6. Composition de la revendication 1, dans laquelle l'antioxydant phénolique stériquement encombré, contenant un groupe ester, multifonctionnel et de haut poids moléculaire est le tetrakis[méthylène(3,5-di-tert-butyl-4-hydroxyhydrocinnamate)]-méthane.

7. Composition de la revendication 1, dans laquelle l'additif d'amélioration de soudure comprend en outre un mélange de sel de cuivre et d'halogénure de potassium.

8. Objet modelé par soufflage à partir d'une composition d'une quelconque des revendications 1 à 7.

9. Utilisation d'un additif d'amélioration de soudure comprenant un mélange de:
(I) un antioxydant phénolique stériquement encombré, contenant de l'azote, multifonctionnel et de haut poids moléculaire représenté par la formule suivante: 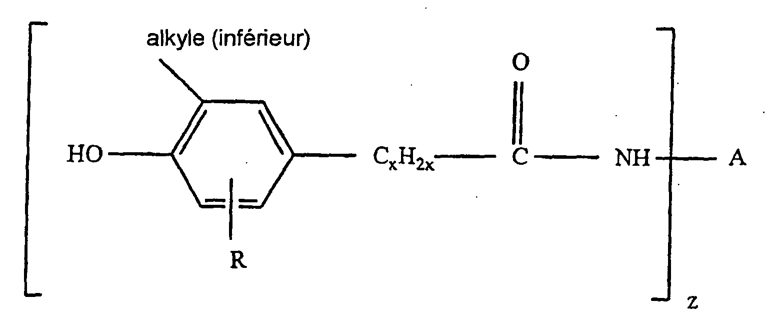 dans laquelle R est un hydrogène ou un alkyle en C₁ - C₃₀, la valeur de x varie de 0 à 6, la valeur de z varie de 2 à 4 et A est une chaîne d'hydrocarbure polyvalente ayant une valence égale à z; et
(II) un antioxydant phénolique stériquement encombré, contenant un groupe ester, multifonctionnel et de haut poids moléculaire,
afin d'améliorer les caractéristiques de soudure d'une composition thermoplastique moulable par soufflage.
